# EUROPÄISCHE PATENTSCHRIFT

(11) **EP 0 845 625 B1**
(45) Veröffentlichungstag und Bekanntmachung des Hinweises auf die Patenterteilung: **04.10.2001**
(21) Anmeldenummer: 97119567.2
(22) Anmeldetag: 07.11.1997
(51) Int. Cl.: F16K 31/06, F16K 31/00

(54) **Elektrisch ansteuerbares Ventil**
Electrically actuated valve
Soupape commandée electriquement.

(30) Priorität: 27.11.1996 DE 19649225
(43) Veröffentlichungstag der Anmeldung: 03.06.1998
(73) Patentinhaber: Nass Magnet GmbH, 30179 Hannover (DE)
(72) Erfinder: Grove, Horst, 30851 Langenhagen (DE); Ossenbrügge, Jan-Peter, 30853 Langenhagen (DE); Hiddessen, Ralf, 31275 Lehrte (DE); Rieck, Frank, 31303 Burgdorf (DE)
(74) Vertreter: Tetzner, Michael, Dipl.-Ing.

(56) Entgegenhaltungen:
- DE-A- 4 326 838
- US-A- 3 666 231
- US-A- 4 382 243
- US-A- 4 678 000

## Beschreibung

Die Erfindung betrifft ein Ventil gemäß dem Oberbegriff des Anspruches 1 mit einem zwischen einer ersten und einer zweiten Stellung hin- und herbeweglichen Schließkörper, einem elektrisch ansteuerbaren Aktor, um den Schließkörper gegen eine Federkraft von der ersten in die zweite Schaltstellung zu bewegen und Haltemitteln, die den Schließkörper in der zweiten Schaltstellung formschlüssig halten.

Aus US 4,678,000 ist ein elektromagnetisches Ventil bekannt, bei dem der Schließkörper mittels eines elektromagnetischen Aktors gegen eine Federkraft in eine Schließstellung bewegt werden kann. Der Schließkörper wird in dieser Stellung durch Haltemittel gehalten, die mit dem Schließkörper in reibschlüssigen Kontakt kommen. Diese Haltemittel werden beim bekannten Stand der Technik durch ringförmige, piezoelektrische Elemente gebildet.

Diese Haltemittel haben jedoch den Nachteil, daß fortwährend elektrische Energie notwendig ist, um den Schließkörper in der Schließstellung festzuklemmen.

In der die Merkmale des Oberbegriffes von Anspruch 1 offenbarenden DE-A-43 26 838 hat man daher für ein bistabiles, elektromagnetisches Schaltsystem vorgeschlagen, den durch Federkraft rückstellbaren Anker in mechanische Wirkverbindung mit einem durch Überhub abwechselnd aus- und einklinkbaren Gesperre zu setzen, wobei der Anker im eingeklinkten Zustand des Gesperres daran gehindert wird, in seine Ausgangsstellung zurückzukehren. Dieses nach Art eines Kugelschreibers arbeitende Prinzip ist jedoch mechanisch relativ aufwendig.

Der Erfindung liegt daher die Aufgabe zugrunde, das Ventil gemäß dem Oberbegriff des Anspruches 1 dahingehend weiterzuentwickeln, daß die Haltemittel in beiden Schaltstellungen des Schließkörpers ohne Energiezufuhr auskommen und dabei einfach aufgebaut sind.

Erfindungsgemäß wird diese Aufgabe durch die kennzeichnenden Merkmale des Anspruches 1 gelöst, indem die Haltemittel durch ein piezoelektrisches Biegeelement gebildet werden. Weitere Vorteile und Ausgestaltungen der Erfindung sind Gegenstand der Unteransprüche und werden anhand der Beschreibung eines Ausführungsbeispieles und der Zeichnung näher erläutert.

In der Zeichnung zeigen
- Fig. 1: eine schematische Schnittdarstellung des erfindungsgemäßen Ventils,
- Fig.2: eine schematische Schnittdarstellung längs der Linie II-II der Fig.1,
- Fig.3: Signalverlauf für die Ansteuerung von Biegeelement und Aktor gemäß einem ersten Ausführungsbeispiel,
- Fig.4: Signalverlauf für die Ansteuerung von Biegeelement und Aktor gemäß einem zweiten Ausführungsbeispiel,
- Fig.5: Signalverlauf für die Ansteuerung von Biegeelement und Aktor gemäß einem dritten Ausführungsbeispiel und
- Fig.6: Signalverlauf für die Ansteuerung von Biegeelement und Aktor gemäß einem vierten Ausführungsbeispiel.

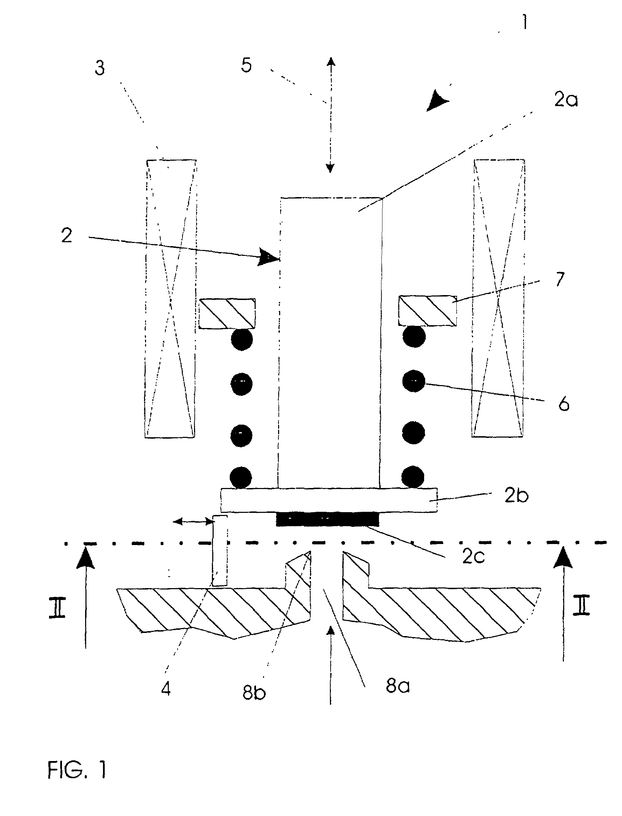

Fig.1 zeigt ein Ventil 1 mit einem zwischen einer ersten und einer zweiten Schaltstellung hin- und herbeweglichen Schließkörper 2 und einem elektrisch ansteuerbaren Aktor 3, um den Schließkörper gegen die Kraft einer Feder 6 von der ersten in die zweite Schaltstellung zu bewegen.

In der dargestellten zweiten Schaltstellung wird eine Düsenöffnung 8a freigegeben, während der Schließkörper 2 in der ersten Schaltstellung mit einem Ventilsitz 8b in Kontakt kommt und die Düsenöffnung 8a verschließt.

Der elektrisch ansteuerbare Aktor 3 ist hier als Spule ausgebildet, während ein Teil des Schließkörpers 2 einen Anker 2a vorsieht, der durch Anregung der Spule in Richtung des Doppelpfeiles 5 bewegbar ist. Die Feder 6 stützt sich einerseits auf einem Widerlager 7 und andererseits auf einem Umfangsflansch 2b am Schließkörper 2 ab.

Am dem Ventilsitz 8b zugewandten Ende des Schließkörpers 2 ist ein Dichtelement 2c angebracht. Die Feder 6 ist derart vorgespannt, daß der Schließkörper 2 in seine erste Stellung, d.h. in seine Schließstellung gedrängt wird, in der er mit seinem Dichtelement 2c auf dem Ventilsitz 8b aufliegt.

Durch Anregung des Aktors 3 wird der Schließkörper 2 gegen die Kraft der Feder 6 in die dargestellte zweite Schaltstellung bewegt.

Um den Schließkörper 2 in dieser zweiten Schaltstellung zu halten, müßte dem Aktor 3 fortwährend Strom zugeführt werden. Um dies vermeiden zu können, sind Haltemittel vorgesehen, die durch ein piezoelektrisches Biegeelement 4 gebildet werden. Dieses Biegeelement 4 ist derart ansteuerbar, daß es den Schließkörper in der zweiten Schaltstellung formschlüssig blockiert.

Das Biegeelement 4 ist prinzipiell zwischen einer, in der Zeichnung mit voll ausgezogenen Linien dargestellten Blockierstellung und einer gestrichelt dargestellten Freigabestellung hin- und herbeweglich.

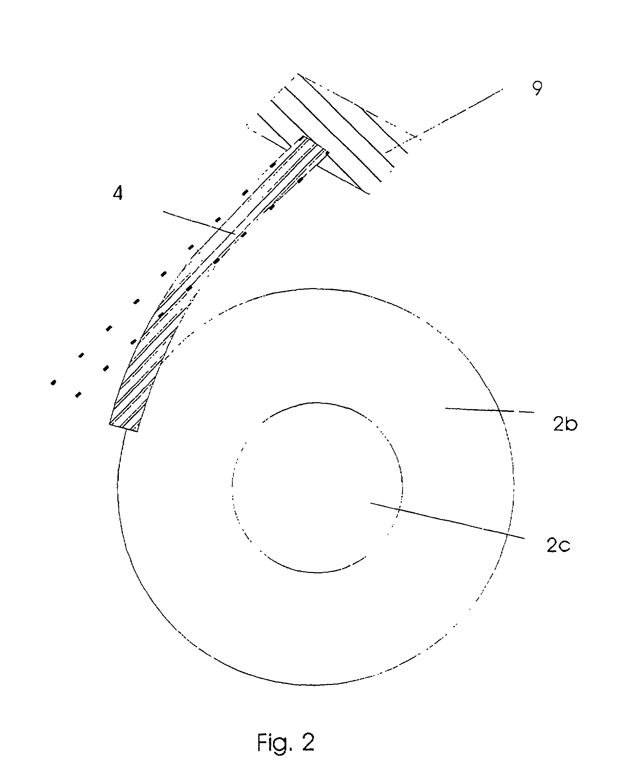

Das Zusammenwirken von Biegeelement 4 und Schließkörper 2 wird durch Fig.2 besonders deutlich. Das Biegeelement 4 ist einseitig in einem Lager 9 eingespannt und verbiegt sich in der dargestellten Art und Weise bei Anlegen einer Spannung. Das Biegeelement wird dabei im wesentlichen quer zur Bewegungsrichtung (Doppelpfeil 5) des Schließkörpers 2 verbogen, so daß es mit dem Schließkörper 2 in Kontakt kommt, wenn dieser nicht mehr durch den Aktor 3 gehalten wird und durch seine Feder 6 in die Schließstellung gedrückt wird. Das Biegeelement 4 blockiert dann den Weg des Schließkörpers und kommt mit diesem in formschlüssigen Kontakt. Das Biegeelement wird dabei zwischen den Schließkörper 2 und einem ortsfesten Widerlager, beispielsweise dem Ventilgehäuse, eingeklemmt.

Letztendlich kommt es jedoch nicht darauf an, ob sich das Biegeelement in seiner Ruhestellung neben oder unter dem Schließkörper 2 befindet. Beide Ausführungsvarianten sind durch eine entsprechende Ansteuerung des Aktors 3 bzw. des Biegeelementes 4 möglich.

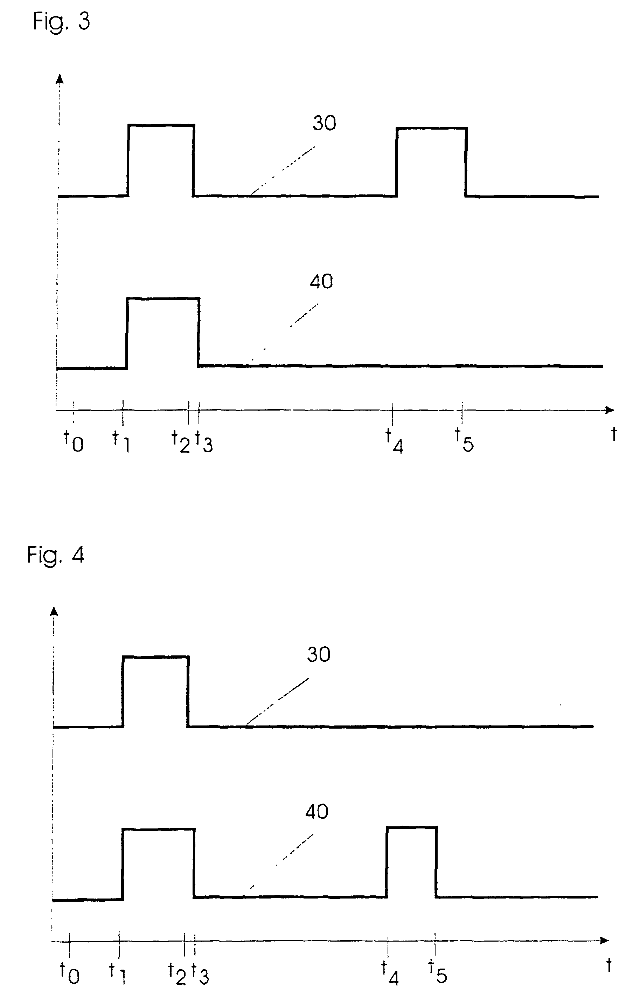

Anhand der Figuren 3 bis 6 werden unterschiedliche Ansteuerungsmöglichkeiten des Aktors 3 und des Biegeelements 4 dargestellt, wobei der Signalverlauf des Aktors 3 mit dem Bezugszeichen 30 und der Signalverlauf des Biegeelements 4 mit dem Bezugszeichen 40 versehen ist.

Fig.3 beschreibt eine Ansteuerung, bei der sich der Biegeaktor 4 in seiner Ruhestellung neben dem Schließkörper 2 befindet. Zu einem Zeitpunkt t₀ befindet sich der Schließkörper 2 in seiner ersten Schaltstellung, d.h. auf dem Ventilsitz 8b. Um den Schließkörper 2 von der ersten in die zweite Schaltstellung zu bewegen, wird zu einem Zeitpunkt t₁ der Aktor 3 betätigt, so daß der Schließkörper 2 gegen die Kraft der Feder 6 6 zurückgezogen wird. Gleichzeitig erhält auch das Biegeelement 4 eine Ansteuerung, wodurch sich das Biegeelement 4 verbiegt. Das Biegeelement 4 liegt zunächst an der seitlichen Wandung des Umfangsflansches 2b des Schließkörpers 2 an, und rutscht dann unter den Schließkörper 2, sobald dieser in ausreichendem Maße zurückgezogen ist. Zu einem Zeitpunkt t₂ wird dann der Aktor 3 nicht mehr beaufschlagt, so daß der Schließkörper 2 durch die Kraft der Feder 6 zurück in die erste Schließstellung drängt. Dabei kommt der Schließkörper 2 an der Unterseite des Umfangsflansches 2b mit dem Biegeelement in formschlüssigen Kontakt. Danach wird zu einem Zeitpunkt t₃ auch die Ansteuerung des Biegeelementes ausgeschaltet. Das Biegeelement wird ohne Energiebeaufschlagung durch den Schließkörper 2 eingeklemmt.

Um den Schließkörper 2 von dieser zweiten Stellung in die erste Stellung zurückzubringen, ist lediglich eine kurze Aktivierung des Aktors 3 erforderlich, so daß der Schließkörper kurz angehoben wird. Dadurch wird der Kontakt zwischen Biegeelement 4 und Schließkörper 2 aufgehoben und das Biegeelement 4 geht selbsttätig von der Blockierstellung in die Freigabestellung zurück. Wird dann zu einem Zeitpunkt t₅ die Aktivierung des Aktors 3 aufgehoben, bewegt sich der Schließkörper 2 durch die Kraft der Feder 6 in seine Schließstellung auf den Ventilsitz 8b.

Fig.4 zeigt eine weitere Ansteuerungsmöglichkeit, durch die der Schließkörper 2 in die Schließstellung gebracht werden kann. Bei dieser Variante wird zum Zeitpunkt t₄ nicht der Aktor 3, sondern das Biegeelement 4 betätigt, so daß dieses gegen die durch den Schließkörper 2 verursachten Reibkräfte seitlich in die Freigabestellung verschiebbar ist. Die dabei zu überwindenden Reibkräfte können durch den Kontaktwinkel zwischen Biegeelement 4 und Schließkörper 2 sowie der Kraftwirklinie der Feder 6 angepaßt werden.

Bei der Lösung gemäß Fig.3 ist lediglich ein Biegeelement erforderlich, das einen ausreichenden Verstellweg zur Verfügung stellt. Eine Stellkraft ist dabei nicht erforderlich. Bei der Lösung gemäß Fig.4 hingegen muß der Aktor zusätzlich eine ausreichende Stellkraft zur Verfügung stellen, um die durch den Schließkörper 2 hervorgehobenen Reibkräfte zu überwinden.

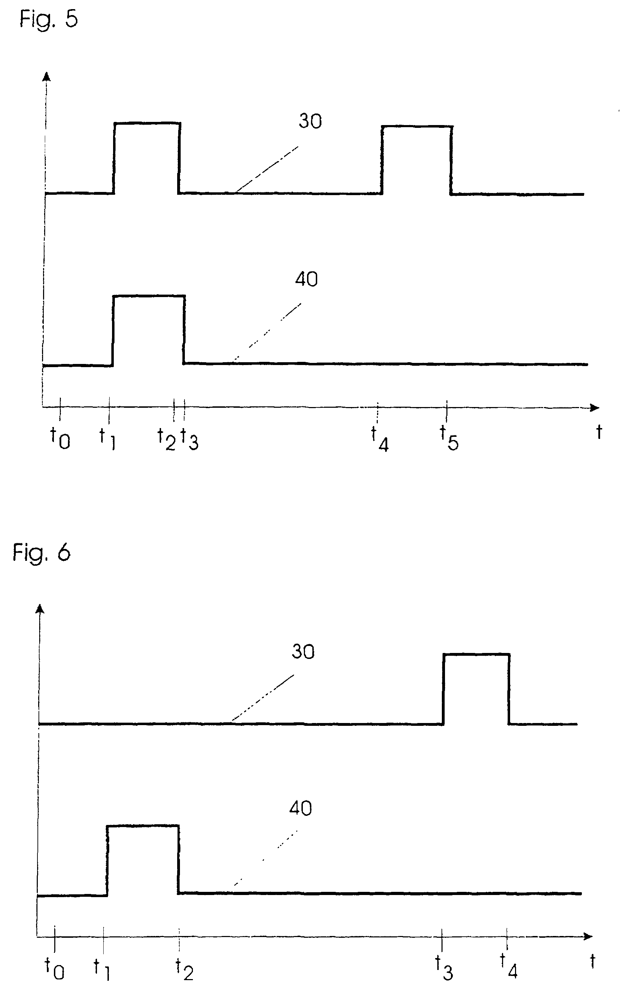

In den Figuren 5 und 6 werden nun Signalverläufe dargestellt, die ein Biegeelement 4 betreffen, das seine Ruhestellung unter dem Schließkörper 2, d.h. in der Blockierstellung hat.

In Fig.5 befindet sich der Schließkörper 2 zum Zeitpunkt t₀ in seiner zweiten Stellung, in der er durch das Biegeelement 4 blockiert wird. Durch Ansteuerung des Aktors 3 zum Zeitpunkt t₁ wird der Schließkörper 2 leicht angehoben, so daß durch gleichzeitige Aktivierung des Biegeelementes 4, dieses ausgelenkt und in seine Freigabestellung verschoben wird. Indem der Aktor 3 zu einem Zeitpunkt t₂ und das Biegeelement 4 zu einem späteren Zeitpunkt t₃ deaktiviert werden, gelangt der Schließkörper in seine Schließstellung auf dem Ventilsitz 8b. Das Biegeelement 4 liegt dabei an der seitlichen Wandung des Umfangsflansches 2b des Schließkörpers 2 an.

Zur Freigabe der Düsenöffnung 8a ist es lediglich erforderlich, den Aktor 3 zu einem Zeitpunkt t₄ zu aktivieren, so daß der Schließkörper 2 nach oben verschoben wird. Sobald der Schließkörper 2 in ausreichendem Maße zurückgeschoben ist, rutscht das Biegeelement 4 selbsttätig unter den Schließkörper 2, so daß nach Deaktivieren des Aktors 3 zu einem Zeitpunkt t₅ der Schließkörper 2 in formschlüssigen Kontakt mit dem Biegeelement 4 kommt.

Bei der Ansteuerung gemäß Fig.6 befindet sich der Schließkörper zum Zeitpunkt t₀ wiederum in der zweiten Stellung, in der er durch das Biegeelement 4 blockiert wird. Durch Ansteuerung des Biegeelements 4 über den Zeitraum t₁ bis t₂ wird eine ausreichende Stellkraft erzeugt, die das Biegeelement entgegen der durch den Schließkörper 2 hervorgerufenen Reibkraft seitlich verschiebt, so daß der Schließkörper 2 freigegeben und durch die Feder 6 in seine Schließstellung bewegt wird. Nach Deaktivieren des Biegeelements, liegt dieses wiederum an der seitlichen Wandung des Umfangsflansches 2b des Schließkörpers an. Zur Freigabe der Düsenöffnung 8a wird der Aktor 3 für einen Zeitraum zwischen t₃ und t₄ aktiviert. Dadurch wird der Schließkörper 2 von seinem Ventilsitz 8b so weit abgehoben, bis das Biegeelement 4 selbsttätig in seine Ruhestellung unter dem Schließkörper 2 zurückgeht. Nach Deaktivieren des Aktors 3 setzt der Schließkörper 2 auf dem Biegeelement 4 auf und wird dabei blockiert.

Gerade das letzte Beispiel zeigt eine besonders einfache Art der Ansteuerung, da für eine Schaltbewegung des Schließkörpers nur der Aktor 3 bzw. das Biegeelement 4 angesteuert werden muß. Bei der Betätigung des Biegeelementes 4 gelangt der Schließkörper von seiner Öffnungsstellung in seine Schließstellung und bei Betätigung des Aktors 3 von seiner Schließstellung in die Öffnungsstellung.

Die Ansteuerung gemäß Fig.5 hat den Vorteil, daß das Biegeelement kraftfrei bewegt werden kann, während bei der Ansteuerung gemäß Fig.6 das Biegeelement zusätzlich die durch den Schließkörper 3 verursachte Reibkraft überwinden muß. Dafür ist bei der Ansteuerung gemäß Fig.6 lediglich eine Betätigung des Biegeelements 4 erforderlich, um den Schließkörper in die Schließstellung zu bringen.

Bei allen Ausführungsbeispielen ist lediglich zum Verschieben des Schließkörpers elektrische Energie notwendig. Sobald sich der Schließkörper in einer der beiden Schaltstellungen befindet, wird er in dieser ohne weitere Energiebeaufschlagung gehalten.

Das piezoelektrische Biegeelement als Haltemittel zeichnet sich durch einen sehr einfachen und kompakten Aufbau sowie eine einfache Möglichkeit der Ansteuerung aus.

## Patentansprüche

1. Ventil (1) mit
a) einem zwischen einer ersten und einer zweiten Schaltstellung hin- und herbeweglichen Schließkörper (2),
b) einem elektrisch ansteuerbaren Aktor (3), um den Schließkörper (2) gegen eine Federkraft von der ersten in die zweite Schaltstellung zu bewegen und
c) Haltemitteln, die den Schließkörper in der zweiten Schaltstellung formschlüssig halten,
**dadurch gekennzeichnet, daß**
d) die Haltemittel durch ein piezoelektrisches Biegeelement (4) gebildet werden.

2. Ventil nach Anspruch 1, **dadurch gekennzeichnet, daß** das Biegeelement (4) zwischen einer Freigabe- und einer Blockierstellung hin- und herbeweglich ist.

3. Ventil nach Anspruch 2, **dadurch gekennzeichnet, daß** das Biegeelement (4) im wesentlichen quer zur Bewegungsrichtung (5) des Schließkörpers (2) beweglich ist.

4. Ventil nach Anspruch 2, **dadurch gekennzeichnet, daß** das Biegeelement (4) durch elektrische Ansteuerung von der Freigabe- in die Blockierstellung beweglich ist.

5. Ventil nach Anspruch 2, **dadurch gekennzeichnet, daß** das Biegeelement (4) durch Reibschluß mit dem Schließkörper (2) in der Blockierstellung gehalten wird.

6. Ventil nach Anspruch 2, **dadurch gekennzeichnet, daß** die Blockierstellung des Biegeelementes durch Ansteuerung des Aktors (3) des Schließkörpers (2) aufhebbar ist.

7. Ventil nach Anspruch 2, **dadurch gekennzeichnet, daß** sich das Biegeelement (4) in seiner Ruhestellung in der Freigabestellung befindet.

8. Ventil nach Anspruch 2, **dadurch gekennzeichnet, daß** sich das Biegeelement (4) in seiner Ruhestellung in der Blockierstellung befindet.

9. Ventil nach Anspruch 2, **dadurch gekennzeichnet, daß** das Biegeelement (4) nach Aufhebung des Kontaktes mit dem Schließkörper (2) selbsttätig in die Freigabestellung beweglich ist.

10. Ventil nach Anspruch 2, **dadurch gekennzeichnet, daß** das Biegeelement (4) in der Blockierstellung zwischen Schließkörper (2) und einem Widerlager eingeklemmt ist.

11. Ventil nach Anspruch 2, **dadurch gekennzeichnet, daß** das Biegeelement (4) sowohl in der Freigabe- als auch in der Blockierstellung ohne Energiezufuhr gehalten wird.

## Claims

1. Valve (1) with
a) a closure member (2) which is movable to and fro between a first and a second setting position,
b) an electrically controllable actuator (3) in order to move the closure member (2) against a spring force from the first into the second setting position, and
c) retaining means which retain the closure member positively in the second setting position,
**characterised in that**
d) the retaining means are formed by a piezoelectric bending element (4).

2. Valve as claimed in Claim 1, **characterised in that** the bending element (4) is movable to and fro between a releasing and a locking position.

3. Valve as claimed in Claim 2, **characterised in that** the bending element (4) is essentially movable at right angles to the direction of movement (5) of the closure member (2).

4. Valve as claimed in Claim 2, **characterised in that** the bending element (4) is movable by electrical control from the releasing into the locking position.

5. Valve as claimed in Claim 2, **characterised in that** the bending element (4) is retained in the locking position by friction with the closure member (2).

6. Valve as claimed in Claim 2, **characterised in that** the locking position of the bending element can be discontinued by control of the actuator (3) of the closure member (2).

7. Valve as claimed in Claim 2, **characterised in that** the bending element (4) in its rest position is located in the releasing position.

8. Valve as claimed in Claim 2, **characterised in that** the bending element (4) in its rest position is located in the locking position.

9. Valve as claimed in Claim 2, **characterised in that** after contact with the closure member (2) has been broken the bending element (4) is movable automatically into the releasing position.

10. Valve as claimed in Claim 2, **characterised in that** in the locking position the bending element (4) is clamped between the closure member (2) and an abutment.

11. Valve as claimed in Claim 2, **characterised in that** the bending element (4) is retained without the supply of power both in the releasing and in the locking position.

## Revendications

1. Soupape (1) comportant
a) un corps de fermeture (2) déplaçable en va-et-vient entre des première et seconde positions de commutation,
b) un actionneur commandable électriquement (3) pour déplacer le corps de fermeture à l'encontre de la force d'un ressort depuis la première position de commutation dans la seconde position de commutation, et
c) des moyens de retenue, qui retiennent le corps de fermeture selon une liaison par formes complémentaires dans la seconde position de commutation,
**caractérisée en ce que**
d) les moyens de retenue sont formés par un élément piézo-électrique (4).

2. Soupape selon la revendication 1, **caractérisée en ce que** l'élément de flexion (4) est déplaçable en va-et-vient entre une position de libération et une position de blocage.

3. Soupape selon la revendication 2, **caractérisée en ce que** l'élément de flexion (4) est déplaçable essentiellement transversalement par rapport à la direction de déplacement (5) du corps de fermeture (2).

4. Soupape selon la revendication 2, **caractérisée en ce que** l'élément de flexion (4) est déplaçable au moyen d'une commande électrique depuis la position de blocage pour venir dans la position de libération.

5. Soupape selon la revendication 2, **caractérisée en ce que** l'élément de flexion (4) est retenu selon une liaison par frottement avec le corps de fermeture (2) dans la position de blocage.

6. Soupape selon la revendication 2, **caractérisée en ce que** la position de blocage de l'élément de flexion peut être supprimée par commande de l'actionneur (3) du corps de fermeture (2).

7. Soupape selon la revendication 2, **caractérisée en ce que** dans sa position de repos, l'élément de flexion (4) est situé dans la position de libération.

8. Soupape selon la revendication 2, **caractérisée en ce que** dans sa position de repos, l'élément de flexion (4) est situé dans la position de blocage.

9. Soupape selon la revendication 2, **caractérisée en ce qu'**après suppression du contact avec le corps de fermeture (2), l'élément de flexion (4) est déplaçable automatiquement dans la position de libération.

10. Soupape selon la revendication 2, **caractérisée en ce que** dans la position de blocage l'élément de flexion (4) est serré entre le corps de fermeture (2) et une butée.

11. Soupape selon la revendication 2, **caractérisée en ce que** l'élément de flexion (4) est retenu aussi bien dans la position de libération que dans la position de blocage, sans apport d'énergie.
